# EUROPEAN PATENT SPECIFICATION

(11) **EP 2 905 105 B1**
(45) Date of publication and mention of the grant of the patent: **06.02.2019**
(21) Application number: 13843852.8
(22) Date of filing: 03.09.2013
(51) Int. Cl.: B23K 35/368, B23K 35/30, B23K 35/40, B23K 35/36, B23K 35/362, B23K 35/02

(54) **FLUX-CORED WIRE**
FÜLLDRAHT
FIL FOURRÉ

(30) Priority: 02.10.2012 JP 2012220708
(43) Date of publication of application: 12.08.2015
(73) Proprietor: Kabushiki Kaisha Kobe Seiko Sho (Kobe Steel, Ltd.), Kobe-shi, Hyogo 651-8585 (JP)
(72) Inventor: NISHIMOTO, Shinichi, Fujisawa-shi, Kanagawa 251-0014 (JP); KOTAKA, Masaki, Ibaraki-shi, Osaka 567-0879 (JP); MURAKAMI, Koichi, Fujisawa-shi, Kanagawa 251-0014 (JP); MINABE, Kazuyoshi, Ibaraki-shi, Osaka 567-0879 (JP)
(74) Representative: Müller-Boré & Partner Patentanwälte PartG mbB
(86) International application number: PCT/JP2013/073667
(87) International publication number: WO 2014/054369

(56) References cited:
- JP-A- 2000 254 796
- JP-A- 2000 254 796
- JP-A- 2002 331 384
- JP-A- 2002 331 384
- JP-A- 2005 088 039
- JP-A- 2005 088 039
- JP-A- 2010 120 069
- KR-A- 20100 035 229

## Description

The present invention relates to a flux-cored wire, and in particular, to a flux-cored wire for arc welding.

Flux-cored wires are produced by filling the inside of a steel hull with a particular flux. The amount and the type of the flux are factors that determine the quality of the flux-cored wires and significantly affect weldability, weld metal performance, and the like.

Flux-cored wires have good bead appearance, good weldability, and high deposition efficiency compared to solid wires, and thus the amount of flux-cored wires used has been increasing year by year.

Furthermore, among flux-cored wires, flux-cored wires in which a slag-making agent is contained in flux can be used for all-position welding, and are thus used in a wide range of fields such as shipbuilding and bridge construction.

However, the slag-making agent such as TiO₂ has a property of absorbing moisture. Accordingly, flux-cored wires containing the slag-making agent have high moisture absorbency, and thus have shortcomings that increase the susceptibility to lower temperature cracking of a weld metal, that is, shortcomings that cause lower temperature cracking to easily occur.

In order to solve the problem of the occurrence of lower temperature cracking due to high moisture absorbency of such flux-cored wires, the following technology has been proposed.

For example, PTL 1 proposes a titania-based flux-cored wire filled with flux in an amount of 10 to 20 mass% per total mass of the wire, in which the flux contains particular amounts of titanium, titanium oxide, a sodium compound, and a potassium compound, and the specific surface area of the titanium oxide is 0.4 to 2.0 m²/g (PTL 1: Japanese Unexamined Patent Application Publication No. 2005-88039). Further, JP 2000-254796 A discloses a flux-cored wire for welding, wherein a flux is filled in a metal-made outer shell, and wherein the flux contains 20 to 60 wt.-% of titanium oxide.

In the technology according to PTL 1, by specifying the specific surface area of titanium oxide in the flux in the range of 0.4 to 2.0 m²/g (about 0.140 m²/g or more in terms of moisture adsorption area of the wire), moisture absorbency of the flux-cored wire is decreased to suppress the occurrence of lower temperature cracking. It is believed that a certain effect is obtained in this regard.

However, the requirements for suppressing the occurrence of lower temperature cracking in a welded portion are continuously increasing. Thus, it is expected that the technology according to PTL 1 cannot sufficiently satisfy (or will not become capable of sufficiently satisfying) the current level and the level required in the future.

Accordingly, the present invention addresses the problem of providing a flux-cored wire that ensures weldability at the level that has been demanded in the past while being able to further limit the occurrence of lower temperature cracking by improving resistance to moisture absorption compared to conventional wires.

As a result of intensive studies conducted in order to solve the problem, the inventors of the present invention found that the problem can be solved by specifying a content of titanium and titanium oxide in flux to a particular range and specifying a moisture adsorption area to a particular range. This finding led to the completion of the present invention.

Specifically, a flux-cored wire according to the present invention is a flux-cored wire for arc welding, in which a steel hull is filled with flux, the flux-cored wire being characterized in that the flux contains 20 to 50 mass% of titanium and titanium oxide calculated as TiO₂ and a moisture adsorption area of the flux-cored wire is 0.020 to 0.100 m²/g, in that the flux-cored wire has a tensile strength of 300 to 500 N/mm², and in that a filling ratio of the flux is 10 to 20 mass% per total mass of the wire, and the hull has a thickness of 0.10 to 0.30 mm.

In the flux-cored wire according to the present invention, the contents of titanium and titanium oxide in the flux and the moisture adsorption area are specified in particular ranges in this manner. Accordingly, the amount of moisture absorbed by the wire can be significantly reduced, that is, the resistance to moisture absorption can be significantly improved compared to conventional wires. In addition, since the flux-cored wire according to the present invention is specified as described above, a decrease in the arc concentration and generation of spatter can be suppressed, and weldability can be ensured.

In the flux-cored wire according to the present invention, since the tensile strength is specified as equal to or less than a particular value in this manner, the wire is relatively soft, and pulverization (micronization) of the flux in a wire-drawing step can be suppressed. As a result, an increase in the moisture adsorption area of the flux-cored wire can be prevented.

Furthermore, in the flux-cored wire according to the present invention, since the tensile strength is specified as equal to or more than a particular value, wire feedability can be ensured.

In the flux-cored wire according to the present invention, since the filling ratio of the flux and the thickness of the hull are specified in particular ranges in this manner, an increase in the moisture adsorption area of the flux-cored wire can be prevented and wire feedability can be ensured.

In the flux-cored wire according to the present invention, a tensile strength is 300 to 500 N/mm², a filling ratio of the flux is 10 to 20 mass% per total mass of the wire, and the hull has a thickness of 0.10 to 0.30 mm.

In the flux-cored wire according to the present invention, since the tensile strength, the filling ratio of the flux, and the thickness of the hull are specified in particular ranges in this manner, an increase in the moisture adsorption area of the flux-cored wire can be prevented and wire feedability can be ensured.

The flux-cored wire according to the present invention preferably has a wire diameter φ of 1.1 mm or more and has a seam.

In the flux-cored wire according to the present invention, since the wire diameter is specified as equal to or more than a particular value in this manner, an increase in the moisture adsorption area of the flux-cored wire can be prevented and wire feedability can be ensured.

In the flux-cored wire according to the present invention, since the content of titanium and titanium oxide in flux and the moisture adsorption area are specified in particular ranges, as described above, weldability is ensured at the level that has been demanded in the past while the occurrence of lower temperature cracking can be further suppressed by improving resistance to moisture absorption compared to conventional wires.
[Fig. 1] Fig. 1 includes cross-sectional views (schematic views) of flux-cored wires. Part (a) is a cross-sectional view of a flux-cored wire according to the present embodiment, and part (b) is a cross-sectional view of a conventional flux-cored wire.
[Fig. 2] Fig. 2 includes schematic views illustrating some of steps in a method for producing a flux-cored wire according to the present embodiment.
[Fig. 3] Fig. 3 is a schematic view of a welding apparatus used in an evaluation test of weldability.

Embodiments for carrying out a flux-cored wire according to the present invention will now be described with reference to the drawings as required.

### <<Flux-cored wire>>

A flux-cored wire (hereinafter also simply referred to as "wire") according to the present embodiment is a wire for arc welding, the wire being used for joining metals to each other by using arc discharge, which is a discharge phenomenon of electricity.

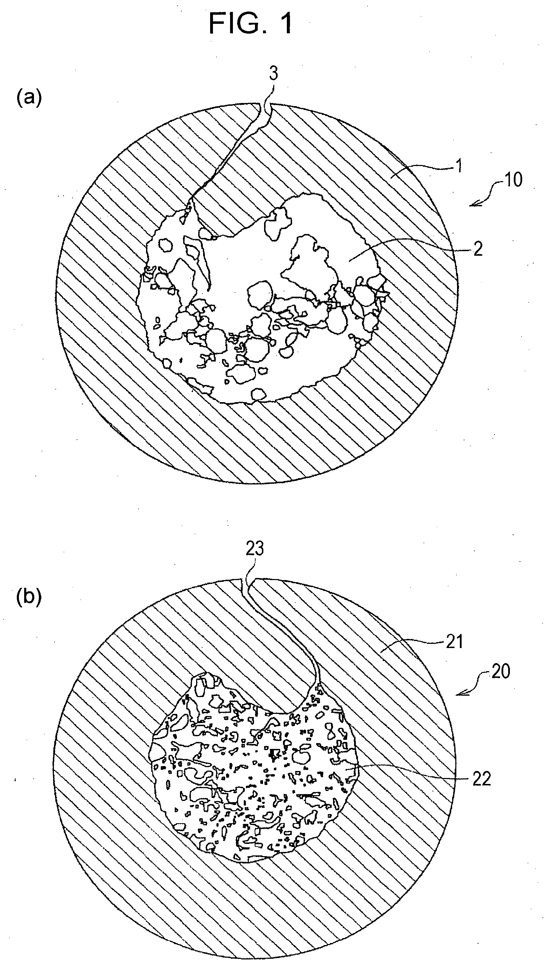

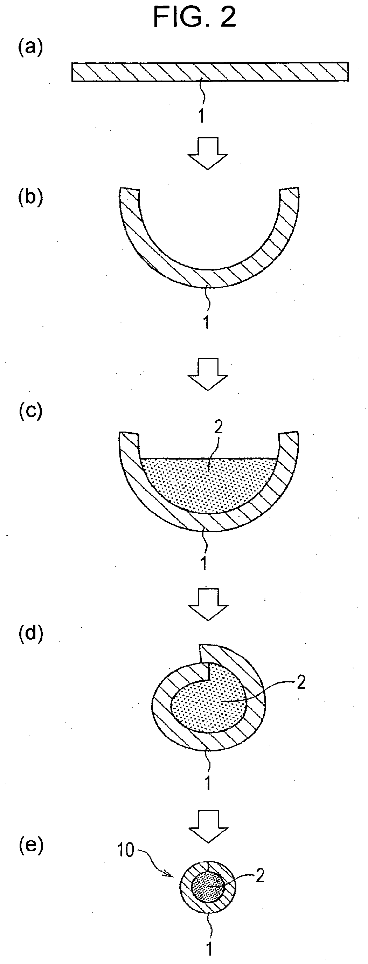

As shown in Fig. 1(a), a flux-cored wire 10 according to the present embodiment has a structure in which the inside of a steel hull 1 is filled with flux 2. In the flux-cored wire 10 according to the present embodiment shown in Fig. 1(a), the grain size of the flux 2 is larger than that in a conventional flux-cored wire 20 shown in Fig. 2(b).

Fig. 1(a) shows, as the present embodiment, a flux-cored wire 10 having a seam 3. Alternatively, the present invention may be applied to a seamless flux-cored wire (that does not have the seam 3).

However, since the flux-cored wire according to the present embodiment has excellent resistance to moisture absorption, the flux-cored wire is preferably applied to a flux-cored wire 10 having a seam 3, the flux-cored wire 10 easily absorbing moisture from a portion of the seam 3. In other words, significant effects of the present invention can be exerted by applying the present invention to, among flux-cored wires, a flux-cored wire 10 having a seam 3, the flux-cored wire 10 having a problem particularly in terms of resistance to moisture absorption.

In the flux-cored wire according to the present embodiment, the flux contains a particular amount of titanium and titanium oxide and the moisture adsorption area of the flux-cored wire is a particular value. Furthermore, the flux-cored wire has a particular tensile strength of the wire, a particular filling ratio of the flux, a particular thickness of the hull, and preferably a particular wire diameter.

A description will be made of components of the flux of the flux-cored wire according to the present embodiment, and the reasons for the numerical limitation of the moisture adsorption area of the wire, the tensile strength of the wire, the filling ratio of the flux, the thickness of the hull, and the wire diameter.

### <Content of titanium and titanium oxide in flux>

When the content of titanium and titanium oxide calculated as TiO₂ per the total mass of the flux is less than 20 mass%, detachability of slag is degraded. On the other hand, when the content of titanium and titanium oxide calculated as TiO₂ per the total mass of the flux exceeds 50 mass%, the amount of slag increases excessively, and inclusion of slag occurs easily, which is not preferable in terms of weldability.

Accordingly, the content of titanium and titanium oxide calculated as TiO₂ per the total mass of the flux is 20 to 50 mass%.

As the titanium oxide of the flux-cored wire according to the present embodiment, titanium oxide such as rutile, leucoxene, or the like is used. As metallic titanium, a FeTi alloy or the like is used. The above content of titanium and titanium oxide is a value obtained by determining the titanium contents contained in the titanium and the titanium oxide in terms of TiO₂, and calculating the total titanium content in terms of TiO₂.

### <Other composition of flux>

In the case where a Na compound is added to the flux, when the content of the Na compound per the total mass of the flux is 0.5 mass% or more calculated as Na₂O, generation of spatter can be suppressed. When the content of the Na compound per the total mass of the flux is 10 mass% or less calculated as Na₂O, an arc is stabilized and the resistance to moisture absorption can be more reliably improved.

Accordingly, in the case where a Na compound is added to the flux, the content of the Na compound per the total mass of the flux is preferably 0.5 to 10 mass% calculated as Na₂O.

As the Na compound of the flux-cored wire according to the present embodiment, albite or the like is used.

In the case where a K compound is added to the flux, when the content of the K compound per the total mass of the flux is 0.5 mass% or more calculated as K₂O, generation of spatter can be suppressed. When the content of the K compound per the total mass of the flux is 10 mass% or less calculated as K₂O, an arc is stabilized and the resistance to moisture absorption can be more reliably improved.

Accordingly, in the case where a K compound is added to the flux, the content of the K compound per the total mass of the flux is preferably 0.5 to 10 mass% calculated as K₂O.

As the K compound of the flux-cored wire according to the present embodiment, potash glass or the like is used.

Examples of components other than the above-described components of the flux of the flux-cored wire according to the present embodiment include, but are not particularly limited to, SiO₂, MgO, Al₂O₃, Fe-Mn, Fe-Si, iron powders, and fluorine compounds.

### <Moisture adsorption area of flux-cored wire>

The moisture adsorption area of the wire not only significantly affects the resistance to moisture absorption, but also affects weldability. When the moisture adsorption area of the wire is 0.100 m²/g or less, the amount of moisture absorption of the wire can be made significantly smaller than those of conventional wires. As a result, the occurrence of lower temperature cracking of a weld metal can be suppressed. When the moisture adsorption area of the wire exceeds 0.100 m²/g, arc concentration decreases. On the other hand, when the moisture adsorption area of the wire is less than 0.020 m²/g, a significant amount of spatter is generated.

Accordingly, the moisture adsorption area of the wire is 0.020 to 0.100 m²/g.

In order to obtain the effect of improving the resistance to moisture absorption more reliably, the moisture adsorption area of the wire is preferably 0.085 m²/g or less and more preferably 0.070 m²/g or less. In order to obtain the effect of improving weldability more reliably, the moisture adsorption area of the wire is still more preferably 0.040 to 0.060 m²/g.

Herein, the term "moisture adsorption area of a wire" refers to the area to which moisture is adsorbed per unit mass of a wire (flux + hull). The moisture adsorption area may be measured by the BET method. That is, a specific surface area of the wire is calculated by the BET method, and the specific surface area (m²/g) may be used as the moisture adsorption area (m²/g).

However, in using the BET method, krypton gas is preferably used without using nitrogen gas.

The moisture adsorption area of the wire can be controlled within the desired range by appropriately combining the composition (the content of titanium and titanium oxide, etc.) of the flux, firing conditions for a firing step described below, and the reduction of area of the wire in a wire-drawing step.

### <Tensile strength of wire>

When the tensile strength of the wire exceeds 500 N/mm², the flux is pulverized (micronized) in the wire-drawing step described below and the moisture adsorption area of the wire increases, which may result in a decrease in the resistance to moisture absorption. That is, when the tensile strength of the wire is 500 N/mm² or less, the wire is relatively soft, and pulverization of the flux is suppressed in the wire-drawing step described below. Thus, an increase in the moisture adsorption area of the wire can be prevented. On the other hand, when the tensile strength of the wire is less than 300 N/mm², the wire is excessively soft and wire feedability degrades.

Accordingly, the tensile strength of the wire is 300 to 500 N/mm².

The tensile strength of the wire can be controlled within the desired range by appropriately combining the compositions of the hull and the flux, firing conditions for a step of firing the flux, etc.

Regarding the method for measuring the tensile strength of the wire, a specimen corresponding to JIS Z 2241 No. 2 may be prepared and the tensile strength of the specimen may be measured by the method in accordance with JIS Z 2241.

### <Filling ratio of flux>

The term "filling ratio of flux" refers to a filling ratio of flux to the total mass of a wire. When the filling ratio of the flux exceeds 20 mass%, the amount of flux increases excessively, and thus there is a high possibility that the flux may overflow or breakage of the wire may occur. As a result, productivity of the wire may decrease. In addition, when the filling ratio of the flux exceeds 20 mass%, pulverization of the flux in the wire-drawing step described below may be accelerated and the moisture adsorption area of the wire may increase. On the other hand, when the filling ratio of the flux is less than 10 mass%, segregation of the flux easily occurs and wire components in the longitudinal direction of the wire do not stabilize. Consequently, weld metal performance may decrease.

Accordingly, the filling ratio of the flux is 10 to 20 mass%.

### <Thickness of hull>

When the thickness of a hull exceeds 0.30 mm, the area occupied by the flux in a cross section of the wire decreases, and thus the density of the flux becomes large. As a result, pulverization of the flux in the wire-drawing step described below may be accelerated, and the moisture adsorption area of the wire may increase. On the other hand, when the thickness of the hull is less than 0.10 mm, wire feedability may degrade.

Accordingly, the thickness of the hull is 0.10 to 0.30 mm.

### <Wire diameter>

When the wire diameter φ is less than 1.1 mm, pulverization of the flux in the wire-drawing step described below may be accelerated, and the moisture adsorption area of the wire may increase. In the case where an increase in the moisture adsorption area is suppressed in a wire having a wire diameter φ of less than 1.1 mm, it is necessary to decrease the reduction of area of the wire. In such a case, however, the wire strength may be insufficient and wire feedability may degrade.

Accordingly, the wire diameter φ is preferably 1.1 mm or more.

### <Others>

The composition of the hull of the flux-cored wire according to the present embodiment, and other characteristics, etc. of the wire that are not specifically described above may be the same as those of known wires, and are not limited as long as the effects obtained by the characteristics described above are achieved.

Next, a method for producing a flux-cored wire according to the present embodiment will be described.

### <<Method for producing flux-cored wire>>

A method for producing a flux-cored wire according to the present embodiment includes a firing step of firing flux, and a wire-drawing step of drawing a flux-cored wire filled with the fired flux.

### <Firing step>

In the firing step, flux is fired before a wire is filled with the flux.

Firing conditions for the flux preferably include a temperature range of 800°C to 1,200°C for 30 minutes or more. Under such conditions, the moisture adsorption area of the wire can be controlled within the desired range, and the effect of improving the resistance to moisture absorption can be ensured.

In parallel to the firing step or after the firing step, a steel hull 1 (strip steel) having a predetermined composition is formed so as to have a U-shaped cross section (Fig. 2(a) → (b)). Next, the inside of the steel hull 1 having the U-shaped cross section is filled with flux 2 fired in the firing step (Fig. 2(b) → (c)). Subsequently, the steel hull 1 is formed to have a cylindrical shape so that the flux 2 is encased within the steel hull 1 (Fig. 2(c) → (d)).

Next, a wire-drawing step described below is performed for the wire in which the flux 2 is encased within the steel hull 1 (Fig. 2(d) → (e)).

### <Wire-drawing step >

In the wire-drawing step, the wire in which the flux is encased within the steel hull is drawn.

Wire-drawing conditions are preferably determined so that the reduction of area of the wire (= (wire cross section before wire-drawing step - wire cross section after wire-drawing step)/wire cross section before wire-drawing step × 100) becomes 40% or more and less than 80%. When the reduction of area of the wire is less than 80%, pulverization (micronization) of the flux in the wire-drawing step is suppressed, and the flux can be maintained in a relatively large state. As a result, the moisture adsorption area of the wire can be reduced, and thus the resistance to moisture absorption can be improved.

The reason why the reduction of area of the wire is specified as equal to or more than 40% is that, when the reduction of area is less than 40%, the amount of wire processing is small, and thus the wire becomes soft and feedability degrades.

In the wire-drawing step, the reduction of area of the wire can be controlled to a particular value or less by determining the size of a steel hull used, from the wire diameter of the final product, such that the wire has a desired reduction of area, more specifically, with regard to the steel hull 1 in the state shown in Fig. 2(a), by using a steel hull 1 having a thickness and a width smaller than those of a steel hull that has hitherto been used.

The method for producing a flux-cored wire according to the present embodiment has been described. In each of the steps, known, conventional conditions may be used as conditions that are not specifically described above. The conditions can be appropriately changed as long as the effects obtained by the process in each of the steps are achieved.

The method for producing a flux-cored wire according to the present embodiment has been described using a method for producing a flux-cored wire having a seam. However, the method is not particularly limited as long as the method includes the firing step and the wire-drawing step. For example, the method described above can be applied to a method for producing a known, conventional seamless flux-cored wire.

### EXAMPLES

Next, flux-cored wires according to the present invention will be specifically described by comparing Examples that satisfy the features of the present invention and Comparative Examples that do not satisfy the features of the present invention.

### <<Preparation of test materials>>

A steel hull having a composition shown in Table 1 was formed as shown in Fig. 2(a) → (b). The inside of the steel hull was filled with flux having a composition shown in Table 2 as shown in Fig. 2(b) → (c). Next, the steel hull was formed so that the flux was encased within the steel hull as shown in Fig. 2(c) → (d). Wire drawing was then performed as shown in Fig. 2(d) → (e) to prepare test materials.

In the preparation of the test materials, the reduction of area of a wire during the wire drawing was changed by using steel hulls having various sizes. The flux was fired at about 1,000°C for about two hours in advance before the inside of each of the steel hulls was filled with the flux. The filling ratio of the flux was 13.5 mass%.

### «Method for measuring moisture adsorption area»

The moisture adsorption area of a wire was measured by the BET method. Specifically, a specific surface area was calculated by the BET method, and the specific surface area (m²/g) was used as the moisture adsorption area (m²/g). Samples prepared by cutting each of the test materials (wires) to have a columnar shape (height: 20 mm) were used as measurement targets.

In using the BET method, krypton gas was used as gas.

### <<Method for measuring tensile strength of wire>>

Specimens corresponding to JIS Z 2241 No. 2 were prepared from the test materials. A tensile strength of each wire was measured by the method in accordance with JIS Z 2241 using each of the specimens.

### <<Method for evaluating resistance to moisture absorption>>

Each of the test materials was dried at 110°C for one hour and then maintained (subjected to a moisture absorption treatment) in an atmosphere at an air temperature of 30°C and a relative humidity of 80% for 96 hours. A water content of each of the resulting wires after the above moisture absorption was measured in an Ar atmosphere at 750°C by a Karl Fischer method (KF method) in accordance with JIS K 0068.

When the water content after the moisture absorption was less than 200 ppm, the wire was evaluated as "excellent: A". When the water content after the moisture absorption was 200 to 250 ppm, the wire was evaluated as "good: B". When the water content after the moisture absorption exceeded 250 ppm, the wire was evaluated as "not good: C".

### <<Method for evaluating weldability>>

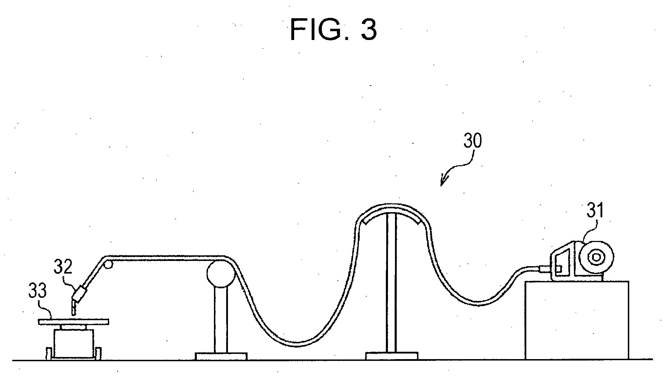

Build-up welding (about 500 mm) was performed on an upper surface of a sheet of a base material by using each of the test materials. More specifically, the welding was performed under the conditions of wire feed speed: 10 m/min, feeding system: pushing system, length of torch: 6 m, average current-voltage: 300 A-30 V, distance between base material and wire: 25 mm, and welding speed: 30 cm/min. As shown in Fig. 3, the welding was performed by using a welding apparatus 30 in which a wire was fed to a leading end of a welding torch 32 by a feeding device 31 and the base material disposed on a stage 33 could be welded.

During the welding operation described above, when the amount of spatter generated was smaller than the amount of spatter in the case where welding was performed using a conventional wire (existing wire) and the arc concentration was equivalent to that in the case of the conventional wire, the wire was evaluated as "excellent: A". When the amount of spatter was equivalent to that in the case of the conventional wire and the arc concentration was also equivalent to that in the case of the conventional wire, the wire was evaluated as "good: B". When the amount of spatter was larger than that in the case of the conventional wire or when the arc concentration was lower than that in the case of the conventional wire, the wire was evaluated as "not good: C".

### <<Method for evaluating wire feedability>>

During the welding operation described above, when buckling of the wire did not occur, the wire was evaluated as "excellent: A". When buckling of the wire occurred and the wire could not be fed, the wire was evaluated as "not good: C".

Table 1 shows the composition of the steel hull, and Table 2 shows the composition of the flux. Table 3 shows the amount of TiO₂, detailed structures such as the moisture adsorption area, and the results of the evaluation tests.

Note that components other than the components of the compositions shown in Tables 1 and 2 are Fe and unavoidable impurities. The term "TiO₂" in Tables 2 and 3 specifically refers to the amount of titanium and titanium oxide in the flux, the amount being calculated as TiO₂.

**[Table 1]**

| Composition of steel hull (mass%) | | | | |
|---|---|---|---|---|
| C | Si 0.01 | Mn | P | S |
| 0.006 | less than | 0.24 | 0.007 | 0.006 |

**[Table 2]**

| Composition of flux (mass%) | | | | |
|---|---|---|---|---|
| TiO₂ | Al₂O₃ | Alkali metal oxide | Mn | Ni |
| 20 to 50 | 1.0 to 2.5 | 0.1 or more | 15 to 25 | 15 to 25 |

**[Table 3]**

| Test material No. | TiO₂ (mass%) | Moisture adsorption area (m²/g) | Thickness of hull (mm) | Tensile strength of wire (N/mm²) | Wire diameter (mm φ) | Water content after moisture absorption (ppm) | Resistance to moisture absorption | Weldability | Wire feedability |
|---|---|---|---|---|---|---|---|---|---|
| 1 | 42 | 0.064 | 0.23 | 410 | 1.2 | 125 | A | A | A |
| 2 | 50 | 0.084 | 0.28 | 482 | 1.2 | 181 | A | A | A |
| 3 | 42 | 0.077 | 0.12 | 322 | 1.2 | 180 | A | A | A |
| 4 | 42 | 0.081 | 0.25 | 330 | 1.2 | 166 | A | A | A |
| 5 | 22 | 0.035 | 0.30 | 386 | 1.2 | 119 | A | A | A |
| 6 | 42 | 0.097 | 0.26 | 495 | 1.0 | 240 | B | B | A |
| 7 | 42 | 0.046 | 0.08 | 411 | 1.2 | 131 | A | A | C |
| 8 | 42 | 0.081 | 0.27 | 277 | 1.2 | 180 | A | A | C |
| 9 | 22 | 0.145 | 0.32 | 483 | 1.2 | 260 | C | B | A |
| 10 | 42 | 0.190 | 0.28 | 521 | 1.2 | 296 | C | C | A |
| 11 | 50 | 0.238 | 0.39 | 557 | 1.2 | 334 | C | C | A |
| 12 | 42 | 0.246 | 0.33 | 578 | 1.0 | 381 | C | C | A |
| 13 | 42 | 0.049 | 0.26 | 365 | 1.4 | 104 | A | A | A |
| 14 | 42 | 0.171 | 0.41 | 539 | 1.4 | 291 | C | C | A |
| 15 | 22 | 0.044 | 0.09 | 477 | 1.4 | 163 | A | A | C |
| 16 | 42 | 0.073 | 0.29 | 283 | 1.4 | 153 | A | A | C |
| 17 | 42 | 0.155 | 0.44 | 486 | 1.4 | 266 | C | C | A |
| 18 | 22 | 0.188 | 0.28 | 581 | 1.4 | 290 | C | C | A |
| 19 | 42 | 0.040 | 0.29 | 331 | 1.6 | 97 | A | A | A |
| 20 | 22 | 0.042 | 0.08 | 440 | 1.6 | 105 | A | A | C |
| 21 | 42 | 0.053 | 0.29 | 288 | 1.6 | 110 | A | A | C |
| 22 | 42 | 0.147 | 0.44 | 476 | 1.6 | 284 | C | B | A |
| 23 | 22 | 0.133 | 0.28 | 557 | 1.6 | 260 | C | B | A |
| 24 | 42 | 0.169 | 0.45 | 533 | 1.6 | 298 | C | C | A |

### «Examination of results»

Regarding test material Nos. 1 to 8, 13, 15, 16, and 19 to 21, among which test material Nos. 7, 8, 15, 16, 20 and 21 are reference examples, since the amount of titanium and titanium oxide in the flux, the amount being calculated as TiO₂, and the moisture adsorption area were within the ranges specified in the present invention, the evaluation results of the resistance to moisture absorption and the weldability were "A: excellent" or "B: good".

Furthermore, among the test materials, in particular, regarding all the test material Nos. 1 to 5, 13, and 19 in which all the thickness of the hull, the tensile strength of the wire, and the wire diameter were within the ranges specified in the present invention, not only the evaluation results of the resistance to moisture absorption and the weldability but also the evaluation results of the wire feedability were "A: excellent".

In contrast, regarding test material Nos. 9 to 12, 14, 17, 18, and 22 to 24, since the moisture adsorption area was out of the range specified in the present invention, the results of at least one of the evaluation of the resistance to moisture absorption and the evaluation of the weldability were "C: not good".

Note that test material No. 9 was assumed to be the flux-cored wire described in PTL 1.

As described above, it was found that the flux-cored wire according to the present invention ensured weldability at the level that had been demanded in the past while being able to further limit the occurrence of lower temperature cracking by improving resistance to moisture absorption compared to the conventional wire.

Furthermore, it was found that, in the case where the flux-cored wire according to the present invention satisfied particular conditions, good wire feedability could also be realized.

### Reference Signs List

- 1: steel hull (hull)
- 2: flux
- 3: seam
- 10: flux-cored wire (wire)

## Claims

1. A flux-cored wire for arc welding, in which a steel hull is filled with flux,
the flux-cored wire being **characterized in that** the flux contains 20 to 50 mass% of titanium and titanium oxide calculated as TiO₂ and a moisture adsorption area of the flux-cored wire is 0.020 to 0.100 m²/g,
**in that** the flux-cored wire has a tensile strength of 300 to 500 N/mm², and
**in that** a filling ratio of the flux is 10 to 20 mass% per total mass of the wire, and
the hull has a thickness of 0.10 to 0.30 mm.

2. The flux-cored wire according to Claim 1, wherein the flux consists of 20 to 50 mass% of titanium and titanium oxide calculated as TiO₂, 1.0 to 2.5 mass% of Al₂O₃, 0.1 mass% or more of an alkali metal oxide, 15 to 25 mass% of Mn, 15 to 25 mass% of Ni, and the remainder being Fe and unavoidable impurities.

3. The flux-cored wire according to Claim 1 or 2, **characterized by** having a wire diameter φ of 1.1 mm or more and having a seam.

## Patentansprüche

1. Fülldraht zum Lichtbogenschweißen, worin eine Stahlhülse mit Flußmittel gefüllt ist, wobei der Fülldraht **dadurch gekennzeichnet ist, dass** das Flußmittel 20 bis 50 Masse-% Titan und Titanoxid, berechnet als TiO₂, enthält und ein Feuchtigkeitsadsorptionsbereich des Fülldrahts 0,020 bis 0,100 m²/g beträgt,
der Flußdraht eine Zugfestigkeit von 300 bis 500 N/mm² aufweist, und
ein Füllverhältnis des Flußmittels 10 bis 20 Masse-% pro Gesamtmasse des Drahtes beträgt, und
die Hülse eine Dicke von 0,10 bis 0,30 mm aufweist.

2. Fülldraht gemäß Anspruch 1, wobei das Flußmittel aus 20 bis 50 Masse-% Titan und Titanoxid, berechnet als TiO₂, 1,0 bis 2,5 Masse-% Al₂O₃, 0,1 Masse-% oder mehr eines Alkalimetalloxids, 15 bis 25 Masse-% Mn, 15 bis 25 Masse-% Ni besteht und der Rest Fe und unvermeidbare Verunreinigungen sind.

3. Fülldraht gemäß Anspruch 1 oder 2, **gekennzeichnet durch** das Aufweisen eines Drahtdurchmessers φ von 1,1 mm oder mehr und durch das Aufweisen einer Naht.

## Revendications

1. Fil fourré pour soudage à l'arc, dans lequel une coque d'acier est remplie de flux,
le fil fourré étant **caractérisé en ce que** le flux contient 20 à 50 % en masse de titane et d'oxyde de titane calculé comme TiO₂ et une aire d'adsorption d'humidité du fil fourré est de 0,020 à 0,100 m²/g,
**en ce que** le fil fourré a une résistance à la traction de 300 à 500 N/mm², et
**en ce qu'**un rapport de remplissage du flux est de 10 à 20 % en masse par rapport à la masse totale du fil, et
la coque a une épaisseur de 0,10 à 0,30 mm.

2. Fil fourré selon la revendication 1, dans lequel le flux est constitué de 20 à 50 % en masse de titane et d'oxyde de titane calculé comme TiO₂, 1,0 à 2,5 % en masse de Al₂O₃, 0,1 % en masse ou plus d'un oxyde de métal alcalin, 15 à 25 % en masse de Mn, 15 à 25 % en masse de Ni et le reste étant Fe et des impuretés inévitables.

3. Fil fourré selon la revendication 1 ou 2, **caractérisé par** le fait d'avoir un diamètre de fil Φ de 1,1 mm ou plus et ayant un joint.
